# EUROPÄISCHE PATENTSCHRIFT

(11) **EP 2 047 125 B1**
(45) Veröffentlichungstag und Bekanntmachung des Hinweises auf die Patenterteilung: **06.10.2010**
(21) Anmeldenummer: 06806383.3
(22) Anmeldetag: 19.10.2006
(51) Int. Cl.: F16B 19/02, F16B 41/00, F16B 43/00, F16B 17/00, B21D 39/03, B23P 11/00

(54) **HÜLSE**
SLEEVE
MANCHON

(43) Veröffentlichungstag der Anmeldung: 15.04.2009
(73) Patentinhaber: ElringKlinger AG, 72581 Dettingen (DE)
(72) Erfinder: AMANN, Erich, 72108 Rottenburg (DE); BÖHRINGER, Peter, 72584 Hülben (DE)
(74) Vertreter: Hörner, Andreas
(86) Internationale Anmeldenummer: PCT/EP2006/010071
(87) Internationale Veröffentlichungsnummer: WO 2008/046439

(56) Entgegenhaltungen:
- WO-A-95/21335
- WO-A-2004/003317
- DE-A1- 10 063 812

## Beschreibung

Die vorliegende Erfindung betrifft eine Hülse mit einem Hülsengrundkörper und einem separat von dem Hülsengrundkörper hergestellten, in radialer Richtung über den Hülsengrundkörper überstehenden Bund.

Eine solche Hülse ist aus der DE 199 24 502 C2 bekannt. Bei dieser bekannten Hülse ist der Hülsengrundkörper durch eine Klebe-, Schweiß- oder Lötverbindung an dem Bund befestigt. Der Bund und/oder der Hülsengrundkörper sind geschlitzt, damit sich der Hülsengrundkörper und/oder der Bund beim Überstreifen der durch den Bund gebildeten Engstelle über den Gewindebereich einer Schraube aufweiten und wieder zurückschnappen, nachdem die Engstelle vollständig über den Gewindebereich geschoben ist. Nach dem Zurückschnappen ist die Hülse unverlierbar an der Schraube gehalten.

Eine weitere Hülse aus einem Bund sowie einem Hülsengrundkörper, die beide unverlierbar an der Schraube gehalten sind, ist aus der DE 195 10 349 A1 bekannt. Bei dieser Hülse weist der Bund eine tiefgezogene Öffnung mit einem Kragen auf, der von dem Hülsengrundkörper klemmend umschlossen wird. Zur Klemmung des Kragens des Bundes muss die Innenseite des Hülsengrundkörpers an ihrem schraubenkopfseitigen Ende mit einer Fase versehen werden. Der Halt des Hülsengrundkörpers an dem Bund, der nur durch die Klemmwirkung des in den Hülsengrundkörper hineinragenden Kragens bewirkt wird, ist nicht besonders sicher.

Der vorliegenden Erfindung liegt die Aufgabe zugrunde, eine Hülse der eingangs genannten Art zu schaffen, welche einfach herstellbar ist und dennoch einen sicheren Zusammenhalt von Hülsengrundkörper und Bund gewährleistet.

Diese Aufgabe wird bei einer Hülse mit den Merkmalen des Oberbegriffs von Anspruch 1 erfindungsgemäß dadurch gelöst, dass der Hülsengrundkörper mindestens einen Vorsprung aufweist, der in eine an dem Bund vorgesehene Ausnehmung eingreift, wobei der Hülsengrundkörper so mit dem Bund verpresst ist, dass der Hülsengrundkörper und der Bund verliersicher miteinander verbunden sind.

Der vorliegenden Erfindung liegt somit das Konzept zugrunde, den Hülsengrundkörper und den Bund durch den Vorsprung des Hülsengrundkörpers und die Ausnehmung des Bundes sowie durch die Verpressung von Hülsengrundkörper und Bund so miteinander zu verzahnen, dass der Hülsengrundkörper sicher an dem Bund festgelegt ist.

Bei einer bevorzugten Ausgestaltung der Erfindung ist vorgesehen, dass der Hülsengrundkörper mindestens zwei Vorsprünge aufweist, die jeweils in eine an dem Bund vorgesehene Ausnehmung eingreifen.

Hierdurch wird der Halt zwischen dem Hülsengrundkörper und dem damit verpressten Bund verbessert.

Eine weitere Verbesserung des Halts zwischen dem Bund und dem Hülsengrundkörper wird erreicht, wenn der Hülsengrundkörper mindestens drei Vorsprünge aufweist, die jeweils in eine an dem Bund vorgesehene Ausnehmung eingreifen.

Die Vorsprünge folgen dabei vorzugsweise im wesentlichen äquidistant längs der Umfangsrichtung des Hülsengrundkörpers aufeinander.

Der mindestens eine Vorsprung des Hülsengrundkörpers ist vorzugsweise im wesentlichen parallel zu der Längsachse des Hülsengrundkörpers ausgerichtet.

Um den Bund an den Schraubenkopf einer Schraube anlegen zu können, welche sich durch die Hülse hindurch erstreckt, ist es von Vorteil, wenn der mindestens eine Vorsprung an einem schraubenkopfseitigen Ende des Hülsengrundkörpers angeordnet ist.

Bei einer bevorzugten Ausgestaltung der Erfindung ist vorgesehen, dass die mindestens eine Ausnehmung berandende Bereiche des Bundes, die insbesondere als Stege ausgebildet sein können, im mit dem Hülsengrundkörper verpressten Zustand im wesentlichen senkrecht zur Längsachse des Hülsengrundkörpers ausgerichtet sind. Dadurch wird erreicht, dass der Bund im mit dem Hülsengrundkörper verpressten Zustand im wesentlichen eben ausgebildet ist.

Die mindestens eine Ausnehmung des Bundes mündet vorzugsweise in eine Durchtrittsöffnung des Bundes.

Der Bund weist vorzugsweise eine im wesentlichen mittig an dem Bund angeordnete Durchtrittsöffnung, insbesondere eine Durchtrittsöffnung für den Durchtritt einer Schraube durch die Hülse, auf.

Bei einer bevorzugten Ausgestaltung der Erfindung ist der Bund aus einer Bund-Vorform gebildet, bei welcher die mindestens eine Ausnehmung des Bundes berandende Bereiche des Bundes, die insbesondere als Stege ausgebildet sein können, schräg zur Mittelachse des Bundes ausgerichtet sind.

Dabei kann insbesondere vorgesehen sein, dass die die mindestens eine Ausnehmung des Bundes berandenden Bereiche der Bund-Vorform eine Vorform-Durchtrittsöffnung definieren, deren Durchmesser größer ist als der Durchmesser der Durchtrittsöffnung des Bundes im mit dem Hülsengrundkörper verpressten Zustand.

Der Bund der erfindungsgemäßen Hülse kann radial nach innen und gleichzeitig radial nach außen über den Hülsengrundkörper überstehen.

Alternativ hierzu kann auch vorgesehen sein, dass der Bund nur radial nach außen über den Hülsengrundkörper übersteht.

Der radial innenliegende Rand des Bundes kann in diesem Fall insbesondere bündig mit einer Innenwand des Hülsengrundkörpers ausgebildet sein.

Die erfindungsgemäße Hülse eignet sich insbesondere zur Verwendung in einer Kombination aus einer erfindungsgemäßen Hülse und einer Schraube, die durch die Hülse hindurchtritt.

Bei einer bevorzugten Ausgestaltung einer solchen Kombination ist dabei vorgesehen, dass die Hülse unverlierbar an der Schraube gehalten ist.

Die Verpressung von Hülsengrundkörper und Bund wird dabei vorzugsweise erst dann durchgeführt, wenn die Schraube in den Hülsengrundkörper und eine Bund-Vorform eingesteckt worden ist, so dass es nicht erforderlich ist, einen geschlitzten Hülsengrundkörper und/oder einen geschlitzten Bund zu verwenden, sondern ein schlitzfreier Hülsengrundkörper und ein schlitzfreier Bund benutzt werden können.

Wenn die Schraube einen Schraubenkopf, einen Gewindebereich und einen zwischen dem Schraubenkopf und dem Gewindebereich angeordneten Schaftbereich, dessen Außendurchmesser kleiner ist als der Außendurchmesser des Gewindebereichs, aufweist, so kann die Hülse insbesondere dadurch unverlierbar an der Schraube gehalten sein, dass der Bund eine Durchtrittsöffnung aufweist, deren Durchmesser kleiner ist als der Außendurchmesser des Gewindebereichs der Schraube.

Vorzugsweise ist vorgesehen, dass der Bund der Hülse aus einer Bund-Vorform gebildet ist, welche eine Vorform-Durchtrittsöffnung aufweist, deren Durchmesser so groß ist, dass der Gewindebereich der Schraube durch die Vorform-Durchtrittsöffnung hindurch bewegbar ist.

Hierdurch wird es möglich, die Bund-Vorform mit dem Hülsengrundkörper so zusammenzustecken, dass der mindestens eine Vorsprung des Hülsengrundkörpers in die mindestens eine Ausnehmung der Bund-Vorform eingreift, anschließend den Gewindebereich der Schraube durch die Vorform-Durchtrittsöffnung hindurch zu bewegen und dann den Hülsengrundkörper so mit der Bund-Vorform zu verpressen, dass der Hülsengrundkörper und der aus der Bund-Vorform durch die Verpressung gebildete Bund miteinander zu der Hülse verbunden und unverlierbar an der Schraube gehalten sind.

Die vorliegende Erfindung betrifft ferner ein Verfahren zum Herstellen einer Hülse aus einem Hülsengrundkörper und einem in radialer Richtung über den Hülsengrundkörper überstehenden Bund.

Der vorliegenden Erfindung liegt die weitere Aufgabe zugrunde, ein Verfahren zum Herstellen einer solchen Hülse zu schaffen, welches einfach durchführbar ist und zu einem sicheren Halt des Hülsengrundkörpers und des Bundes untereinander führt.

Diese Aufgabe wird erfindungsgemäß durch ein Verfahren gelöst, das folgende Verfahrensschritte umfasst:
- Bereitstellen einer Bund-Vorform mit einer Vorform-Durchtrittsöffnung und mindestens einer Ausnehmung;
- Bereitstellen eines Hülsengrundkörpers mit mindestens einem Vorsprung;
- Anordnen des Hülsengrundkörpers an der Bund-Vorform derart, dass der mindestens eine Vorsprung des Hülsengrundkörpers in die mindestens eine Ausnehmung der Bund-Vorform eingreift;
- Verpressen des Hülsengrundkörpers mit der Bund-Vorform derart, dass die Bund-Vorform zu einem Bund verformt wird, der verliersicher mit dem Hülsengrundkörper verbunden ist.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: einen schematischen vertikalen Schnitt durch eine Baugruppe aus einem ersten Bauteil und einem zweiten Bauteil, die mittels einer Schraube mit unverlierbar an der Schraube gehaltener Hülse sowie mittels Elastomerelementen schwingungsentkoppelt an- einander festgelegt sind;
- Fig. 2: einen schematischen Längsschnitt durch die Schraube mit Hülse und Elastomerelement aus Fig. 1;
- Fig. 3: eine Draufsicht von oben auf die Schraube mit Hülse und Elasto- merelement aus Fig. 2;
- Fig. 4: eine schematische Explosionsdarstellung der Schraube, einer Bund-Vorform, eines Hülsengrundkörpers und des Elastomerele- ments vor dem Zusammenbau dieser Elemente;
- Fig. 5: eine schematische Draufsicht von oben auf die Bund-Vorform aus Fig. 4;
- Fig. 6: einen schematischen Längsschnitt durch die mit dem Hülsen- grundkörper zusammengesteckte Bund-Vorform;
- Fig. 7: eine schematische perspektivische Darstellung des Bundes und des Hülsengrundkörpers, nachdem der Bund und der Hülsen- grundkörper miteinander verpresst worden sind; und
- Fig. 8: einen schematischen vertikalen Schnitt durch eine Baugruppe aus einem ersten Bauteil und einem zweiten Bauteil, die mittels einer Schraube, einer Hülse und eines Elastomerelements aneinander festgelegt sind, wobei eine Durchtrittsöffnung eines Bundes der Hülse einen Durchmesser aufweist, der größer ist als der Außen- durchmesser des Gewindebereichs der Schraube.

Gleiche oder funktional äquivalente Element sind in allen Figuren mit denselben Bezugszeichen bezeichnet.

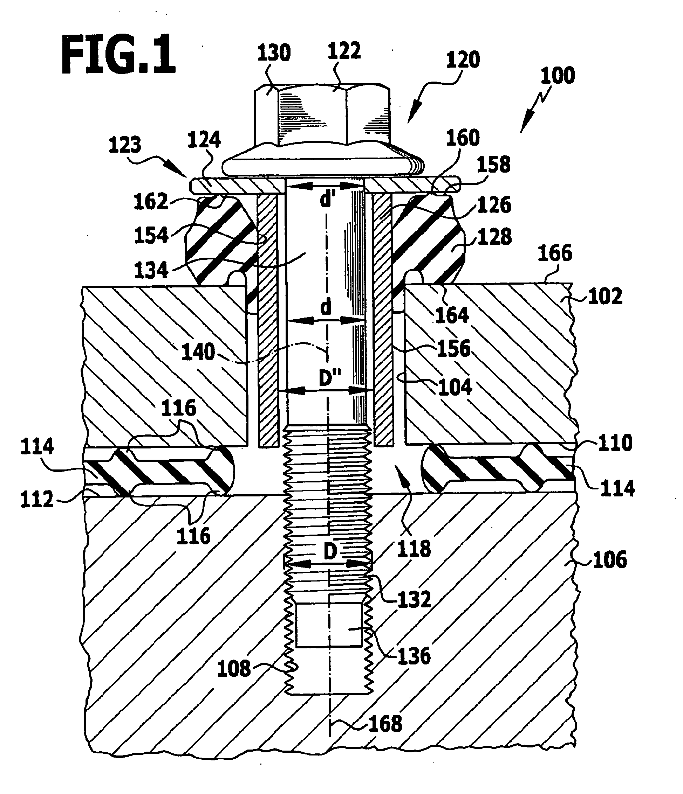

Eine in Fig. 1 ausschnittsweise dargestellte, als Ganzes mit 100 bezeichnete Baugruppe umfasst ein erstes Bauteil 102 mit einer im wesentlichen zylindrischen Durchtrittsöffnung 104, ein zweites Bauteil 106 mit einem Gewindesackloch 108, ein zwischen einer Unterseite 110 des ersten Bauteils 102 und einer Oberseite 112 des zweiten Bauteils 106 angeordnetes elastomeres Dichtelement 114 mit Dichtlippen 116 und einer Durchtrittsöffnung 118 im Bereich des Gewindesackloches 108 sowie eine Kombination 120 aus einer Schraube 122, einer unverlierbar an der Schraube 122 gehaltenen Hülse 123, die einen Bund 124 und einen hohlzylindrischen Hülsengrundkörper 126 umfasst, und einem einen schraubenkopfseitigen Endbereich des Hülsengrundkörpers 126 ringförmig umgebenden, ringförmigen Element 128.

Die Schraube 122 umfasst einen Schraubenkopf 130, der beispielsweise als ein Sechskant-Schraubenkopf ausgebildet sein kann, einen Gewindebereich 132 mit einem Außendurchmesser D, einen zwischen dem Gewindebereich 132 und dem Schraubenkopf 130 angeordneten Schaftbereich 134, dessen Außendurchmesser d kleiner ist als der Außendurchmesser D des Gewindebereichs, und einen sich an die dem Schraubenkopf 130 abgewandte Seite des Gewindebereichs 132 anschließenden Endbereich 136, dessen Außendurchmesser kleiner ist als der Außendurchmesser D des Gewindebereichs 132 und kleiner ist als der Außendurchmesser d des Schaftbereichs 134 der Schraube 122.

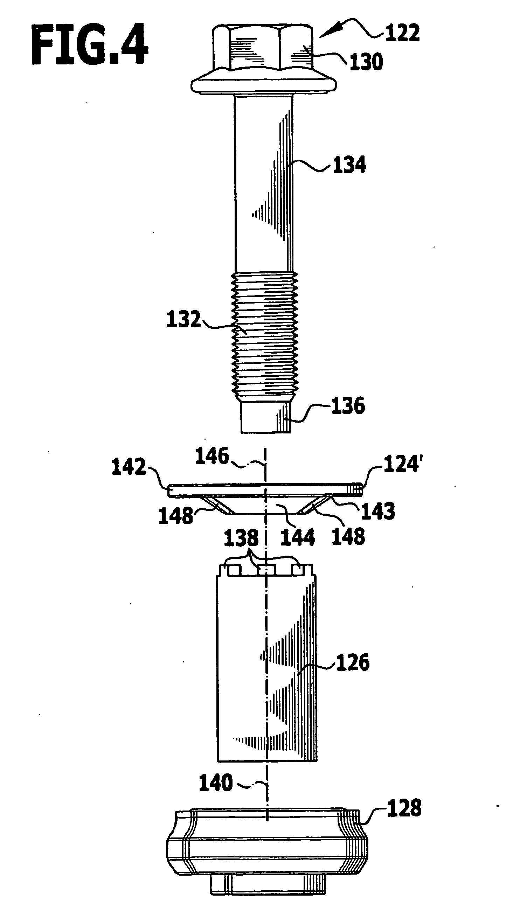

Der Hülsengrundkörper 126 ist, wie am besten aus Fig. 4 zu ersehen ist, hohlzylindrisch ausgebildet und an seinem schraubenkopfseitigen Ende mit mehreren, beispielsweise drei, Vorsprüngen 138 versehen, die sich parallel zur Längsachse 140 des Hülsengrundkörpers 126 erstrecken und in der Umfangsrichtung des Hülsengrundkörpers 126 im wesentlichen äquidistant voneinander beabstandet sind.

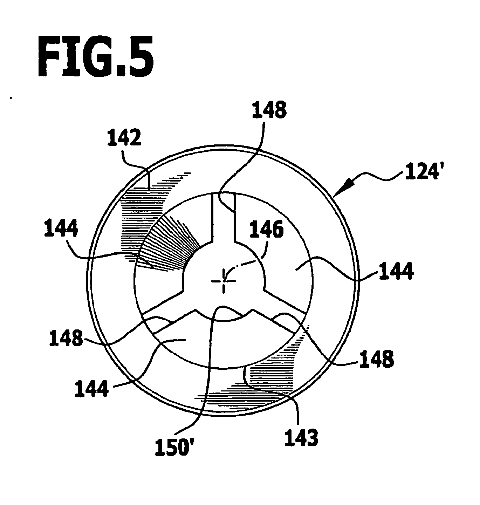

Der über den Hülsengrundkörper 126 radial nach innen und nach außen überstehende Bund 124 ist aus einer in den Fig. 4 und 5 dargestellten Bund-Vorform 124' gebildet.

Die Bund-Vorform 124' umfasst einen ebenen ringförmigen Bereich 142, von dessen radial innenliegendem Rand 143 ausgehend mehrere, beispielsweise drei, Stege 144 radial nach innen und schräg zur Mittelachse 146 der Bund-Vorform 124', vorzugsweise unter einem Winkel von ungefähr 30° bis ungefähr 60° zur Mittelachse 146, abstehen. Diese Stege 144 überstreichen jeweils im wesentlichen einander gleiche Umfangswinkel, wobei längs des Umfangs der Bund-Vorform 124' aufeinanderfolgende Stege 144 durch jeweils eine in radialer Richtung verlaufende Ausnehmung 148 voneinander getrennt sind.

Alle der, beispielsweise drei, Ausnehmungen 148 münden in eine im wesentlichen kreisförmige, mittige Durchtrittsöffnung 150' der Bund-Vorform 124'.

Um aus der Bund-Vorform 124' den Bund 124 herzustellen und zugleich den Bund 124 und den Hülsengrundkörper 126 unverlierbar zu der Hülse 123 zu verbinden und die Hülse 123 unverlierbar an der Schraube 122 zu sichern, wird wie folgt vorgegangen:

Der Hülsengrundkörper 126 wird so an der Bund-Vorform 124' angeordnet, dass die Längsachse 140 des Hülsengrundkörpers 126 und die Mittelachse 146 der Bund-Vorform 124' zusammenfallen und die Vorsprünge 138 am schraubenkopfseitigen Ende des Hülsengrundkörpers 126 in jeweils eine Ausnehmung 148 der Bund-Vorform 124' eingreifen.

Um dies zu ermöglichen, ist die Ausdehnung der Vorsprünge 138 in der Umfangsrichtung des Hülsengrundkörpers 126 geringfügig kleiner als die Ausdehnung der Ausnehmungen 148 in der Umfangsrichtung der Bund-Vorform 124'.

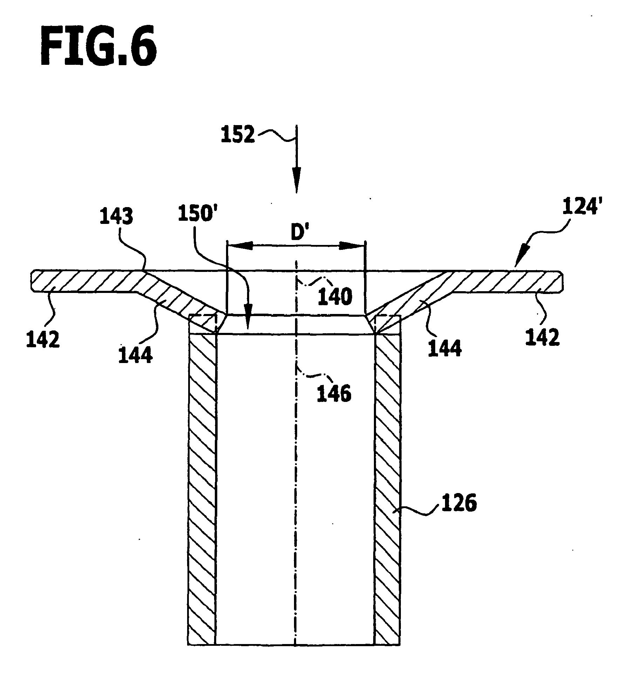

Durch das Zusammenstecken des Hülsengrundkörpers 126 mit der Bund-Vorform 124' entsteht die im Längsschnitt in Fig. 6 dargestellte Anordnung aus Bund-Vorform 124' und Hülsengrundkörper 126, in welcher die mittige Durchtrittsöffnung 150' der Bund-Vorform 124' einen Durchmesser D' aufweist, welcher größer ist als der Außendurchmesser D des Gewindebereichs 132 der Schraube 122.

Die Schraube 122 kann daher mit dem Gewindebereich 132 voran in Richtung des Pfeils 152 in Fig. 6 in die Bund-Vorform 124' und den damit verbundenen Hülsengrundkörper 126 eingesteckt werden, und zwar derart, dass die Durchtrittsöffnung 150' der Bund-Vorform 124' im Bereich des Schaftbereichs 134 der Schraube 122 zu liegen kommt.

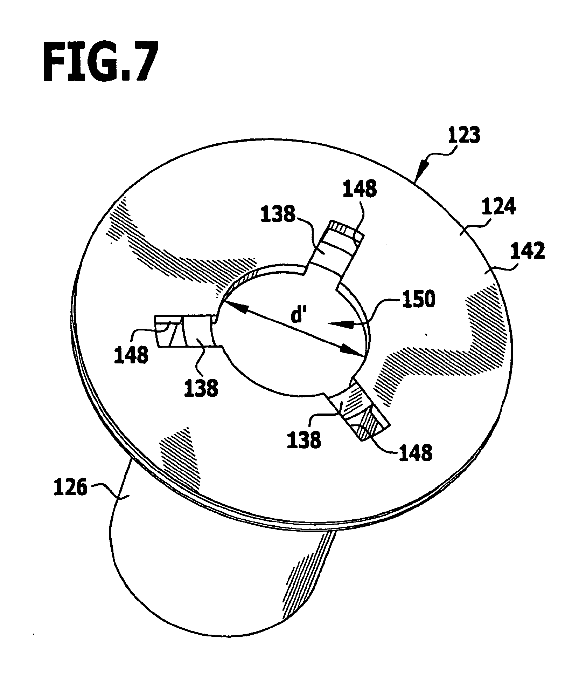

Anschließend werden der Hülsengrundkörper 126 und die Bund-Vorform 124' derart miteinander verpresst, dass die Stege 144 in die Ebene des ebenen ringförmigen Bereichs 142 der Bund-Vorform 124' hochgebogen werden und der Bund 124 entsteht (siehe Fig. 7), welcher im wesentlichen eben ausgebildet ist und eine Durchtrittsöffnung 150 mit einem Durchmesser d' aufweist, der geringfügig größer ist als der Außendurchmesser d des Schaftbereichs 134 der Schraube 122 und kleiner ist als der Außendurchmesser D des Gewindebereichs 132 der Schraube 122, so dass der Bereich der Durchtrittsöffnung 150 des Bundes 124 eine Engstelle bildet, durch welche der Gewindebereich 132 der Schraube 122 nicht mehr hindurchbewegt werden kann.

Nach dem Verpressen des Hülsengrundkörpers 126 mit dem Bund 124, durch welche der Hülsengrundkörper 126 und der Bund 124 form- und/oder kraftschlüssig miteinander zu der Hülse 123 verbunden sind, ist somit die Hülse 123, das heißt die Einheit aus dem Hülsengrundkörper 126 und dem Bund 124, unverlierbar an der Schraube 122 gehalten.

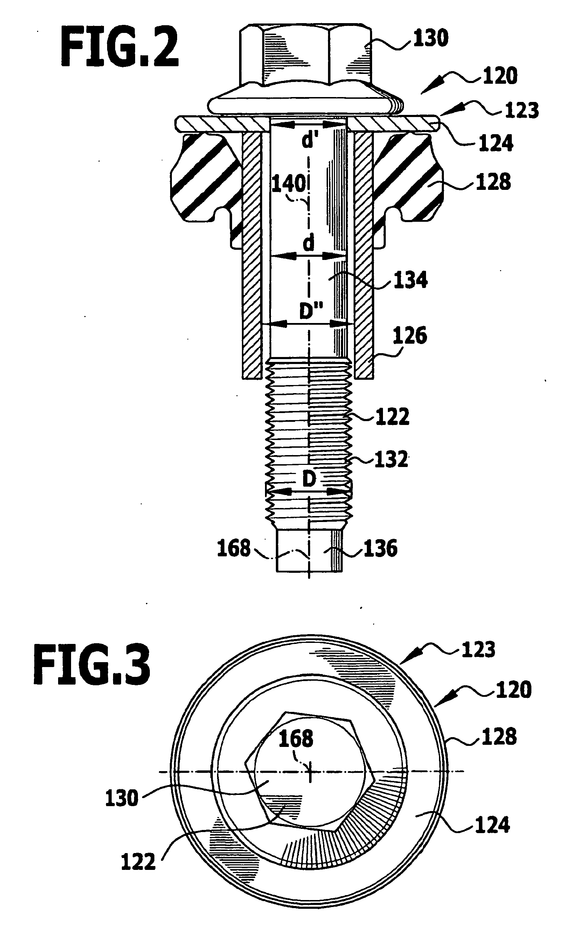

Anschließend wird auf die Außenseite des Hülsengrundkörpers 126 das ringförmige Element 128 aufgeschoben, welches vorzugsweise aus einem elastischen Material, beispielsweise aus einem Elastomermaterial, gebildet ist (siehe Fig. 2 und 3).

Der Hülsengrundkörper 126, der Bund 124 und die Schraube 122 sind vorzugsweise aus einem metallischen Material, insbesondere aus einem Stahlmaterial, gebildet.

Wie am besten aus Fig. 1 zu ersehen ist, weist das ringförmige Element 128 eine innere Anlagefläche 154 zur Anlage an der Außenseite 156 des Hülsengrundkörpers 126, eine schraubenkopfseitige Anlagefläche 158 mit einer Dichtlippe 160 zur Anlage an der Unterseite 162 des Bundes 124 und eine dem Schraubenkopf 130 abgewandte Bauteilanlagefläche 164 zur Anlage an einer Oberseite 166 des ersten Bauteils 102 auf.

Das ringförmige Element 128 kann in Presspassung oder aber auch lose auf die Außenseite 156 des Hülsengrundkörpers 126 aufgeschoben sein.

Im montierten Zustand der Baugruppe 100, wie er in Fig. 1 dargestellt ist, ist das Außengewinde des Gewindebereichs 132 der Schraube 122 in das Innengewinde des Gewindesackloches 108 an dem zweiten Bauteil 106 eingedreht. Die Schraube 122 und die Hülse 123 erstrecken sich durch die Durchtrittsöffnung 104 an dem ersten Bauteil 102 hindurch.

Die Hülse 123 stützt sich über das elastische ringförmige Element 128 an dem ersten Bauteil 102 ab, so dass die Hülse 123 und die Schraube 122 schwingungsmäßig von dem ersten Bauteil 102 entkoppelt sind.

Durch das zwischen dem ersten Bauteil 102 und dem zweiten Bauteil 106 angeordnete elastomere Dichtelement 114 wird ferner eine Schwingungsentkopplung zwischen den beiden Bauteilen 102 und 106 erzielt.

Im montierten Zustand, in dem die Oberseite des Bundes 124 an dem Schraubenkopf 130 anliegt, erstreckt sich der Hülsengrundkörper 126 nach unten bis in den Bereich des Gewindebereichs 132, dessen Außendurchmesser D nur geringfügig kleiner ist als der Innendurchmesser D" des Hülsengrundkörpers 126, so dass gewährleistet ist, dass die Längsachse 140 des Hülsengrundkörpers 126 und der Hülse 123 im wesentlichen parallel zur Längsachse 168 der Schraube 122 ausgerichtet ist.

Der Bund 124 der Hülse 123 dient als Unterlegscheibe für die Schraube 122.

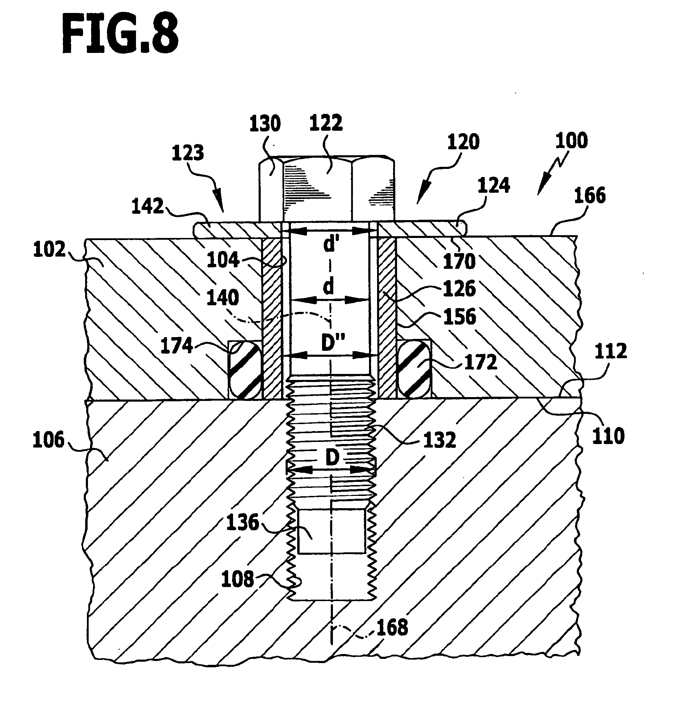

Eine in Fig. 8 ausschnittsweise dargestellte zweite Ausführungsform einer Baugruppe 100 unterscheidet sich von der in den Fig. 1 bis 7 dargestellten ersten Ausführungsform einer solchen Baugruppe dadurch, dass die aus dem Hülsengrundkörper 126 und dem Bund 124 gebildete Hülse 123 nicht über ein ringförmiges Element 128 schwingungsentkoppelt an dem ersten Bauteil 102 der Baugruppe 100 anliegt, sondern mit der Unterseite 170 des Bundes 124 direkt an der Oberseite 166 des ersten Bauteils 102 und mit der Außenseite 156 des Hülsengrundkörpers 126 direkt an der Begrenzungswand der Durchtrittsöffnung 104 in dem ersten Bauteil 102 anliegt.

Ferner sind die beiden Bauteile 102 und 106 der Baugruppe 100 nicht durch ein elastomeres Dichtelement 114 in der axialen Richtung der Schraube 122 voneinander beabstandet; vielmehr liegt die Unterseite 110 des ersten Bauteils 102 direkt flächig auf der Oberseite 112 des zweiten Bauteils 106 auf.

Das dem zweiten Bauteil 106 zugewandte untere Ende der Durchtrittsöffnung 104 in dem ersten Bauteil 102 ist stufenförmig erweitert und nimmt ein ringförmiges elastomeres Dichtelement 172 auf, welches sich koaxial zu der Schraube 122 und dem Hülsengrundkörper 126 der Hülse 123 um den unteren Endabschnitt des Hülsengrundkörpers 126 herum erstreckt und mit seiner Innenseite an der Außenseite 156 des Hülsengrundkörpers 126 sowie mit seiner Außenseite an der Begrenzungswand der stufenförmig erweiterten Durchtrittsöffnung 104 anliegt.

Ein oberes Endes des ringförmigen elastomeren Dichtelements 172 liegt an einer Schulter 174 an, an welcher sich die Durchtrittsöffnung 104 stufenförmig erweitert, während ein unteres Ende des ringförmigen elastomeren Dichtelements 172 an der Oberseite 112 des zweiten Bauteils 106 anliegt.

Die Durchtrittsöffnung des Bundes 124 der Hülse 123 weist bei dieser Ausführungsform im mit dem Hülsengrundkörper 126 verpressten Zustand einen Durchmesser d' auf, welcher größer ist als der Außendurchmesser D des Gewindebereichs 132 der Schraube 122, so dass die fertige Hülse 123 bei dieser Ausführungsform ohne weiteres über den Gewindebereich 132 der Schraube 122 hinweg von der Schraube 122 abgezogen werden kann.

Bei dieser Ausführungsform ist die Hülse 123 also nicht unverlierbar an der Schraube 122 gehalten.

Insbesondere kann vorgesehen sein, dass der Durchmesser d' der Durchtrittsöffnung 150 des Bundes 124 im mit dem Hülsengrundkörper 126 verpressten Zustand im wesentlichen gleich groß ist wie der Innendurchmesser D" des hohlzylindrischen Hülsengrundkörpers 126, so dass also der Bund 124 nur radial nach außen, nicht aber radial nach innen über den Hülsengrundkörper 126 übersteht, sondern vielmehr an der Innenseite der Hülse 123 im wesentlichen mit dem Hülsengrundkörper 126 bündig ist.

Dies wird dadurch erreicht, dass der Durchmesser D' der Bund-Vorform 124' vor dem Verpressen der Bund-Vorform 124' mit dem Hülsengrundkörper 126 größer gewählt wird als bei der ersten Ausführungsform und insbesondere größer gewählt wird als der Innendurchmesser D" des Hülsengrundkörpers 126, und zwar gerade so groß, dass die Durchtrittsöffnung 150 des Bundes 124, nachdem die Stege 144 beim Verpressen des Hülsengrundkörpers 126 und der Bund-Vorform 124' in die Ebene des ebenen ringförmigen Bereichs 142 der Bund-Vorform 124' hochgebogen worden sind, den gewünschten Durchmesser d' aufweist, der im wesentlichen gleich groß ist wie der Innendurchmesser D" des hohlzylindrischen Hülsengrundkörpers 126.

Im montierten Zustand der zweiten Ausführungsform einer Baugruppe 100, wie er in Fig. 8 dargestellt ist, erstreckt sich der Hülsengrundkörper 126 nach unten bis zu der Oberseite 112 des zweiten Bauteils 106, so dass die Hülse 123 als Abstandshalter zwischen dem Schraubenkopf 130 einerseits und dem zweiten Bauteil 106 andererseits dient.

Der Bund 124 der Hülse 123 dient als Unterlegscheibe für die Schraube 122.

Im übrigen stimmt die in Fig. 8 dargestellte zweite Ausführungsform einer Baugruppe 100 hinsichtlich Aufbau, Funktion, Material und Herstellungsweise mit der in den Fig. 1 bis 7 dargestellten ersten Ausführungsform überein, auf deren vorstehende Beschreibung insoweit Bezug genommen wird.

## Patentansprüche

1. Kombination aus einer Hülse (123) mit einem Hülsengrundkörper (126) und einem separat von dem Hülsengrundkörper (126) hergestellten, in radialer Richtung über den Hülsengrundkörper (126) überstehenden Bund (124), und einer Schraube (122), die durch die Hülse (123) hindurchtritt, **dadurch gekennzeichnet, dass**
der Hülsengrundkörper (126) mindestens einen Vorsprung (138) aufweist, der in eine an dem Bund (124) vorgesehene Ausnehmung (148) eingreift, wobei der Hülsengrundkörper (126) so mit dem Bund (124) verpresst ist, dass der Hülsengrundkörper (126) und der Bund (124) verliersicher miteinander verbunden sind.

2. Kombination nach Anspruch 1, **dadurch gekennzeichnet, dass** der Hülsengrundkörper (126) mindestens zwei Vorsprünge (138) aufweist, die jeweils in eine an dem Bund (124) vorgesehene Ausnehmung (148) eingreifen.

3. Kombination nach Anspruch 2, **dadurch gekennzeichnet, dass** der Hülsengrundkörper (126) mindestens drei Vorsprünge (138) aufweist, die jeweils in eine an dem Bund (124) vorgesehene Ausnehmung (148) eingreifen.

4. Kombination nach einem der Ansprüche 2 oder 3, **dadurch gekennzeichnet, dass** die Vorsprünge (138) im wesentlichen äquidistant längs der Umfangsrichtung des Hülsengrundkörpers (126) aufeinanderfolgen.

5. Kombination nach einem der Ansprüche 1 bis 4, **dadurch gekennzeichnet, dass** der mindestens eine Vorsprung (138) im wesentlichen parallel zu der Längsachse (140) des Hülsengrundkörpers (126) ausgerichtet ist.

6. Kombination nach einem der Ansprüche 1 bis 5, **dadurch gekennzeichnet, dass** die mindestens eine Ausnehmung (148) berandende Bereiche des Bundes (124) im mit dem Hülsengrundkörper (126) verpressten Zustand im wesentlichen senkrecht zur Längsachse (140) des Hülsengrundkörpers (126) ausgerichtet sind.

7. Kombination nach einem der Ansprüche 1 bis 6, **dadurch gekennzeichnet, dass** die mindestens eine Ausnehmung (148) des Bundes (124) in eine Durchtrittsöffnung (150) des Bundes (124) mündet.

8. Kombination nach einem der Ansprüche 1 bis 7, **dadurch gekennzeichnet, dass** der Bund (124) eine im wesentlichen mittig an dem Bund (124) angeordnete Durchtrittsöffnung (150) aufweist.

9. Kombination nach einem der Ansprüche 1 bis 8, **dadurch gekennzeichnet, dass** der Bund (124) aus einer Bund-Vorform (124') gebildet ist, bei welcher die mindestens eine Ausnehmung (148) des Bundes (124) berandende Bereiche des Bundes (124) schräg zur Mittelachse (146) des Bundes (124) ausgerichtet sind.

10. Kombination nach Anspruch 9, **dadurch gekennzeichnet, dass** die die mindestens eine Ausnehmung (148) des Bundes (124) berandenden Bereiche der Bund-Vorform (124') eine Vorform-Durchtrittsöffnung (150') definieren, deren Durchmesser (D') größer ist als der Durchmesser (d') der Durchtrittsöffnung (150) des Bundes (124) im mit dem Hülsengrundkörper (126) verpressten Zustand.

11. Kombination nach einem der Ansprüche 1 bis 10, **dadurch gekennzeichnet, dass** der Bund (124) radial nach innen und radial nach außen über den Hülsengrundkörper (126) übersteht.

12. Kombination nach einem der Ansprüche 1 bis 10, **dadurch gekennzeichnet, dass** der Bund (124) nur radial nach außen über den Hülsengrundkörper (126) übersteht.

13. Kombination nach einem der Ansprüche 1 bis 12, **dadurch gekennzeichnet, dass** die Hülse (123) unverlierbar an der Schraube (122) gehalten ist.

14. Kombination nach einem der Ansprüche 1 bis 13, **dadurch gekennzeichnet, dass** die Schraube (122) einen Schraubenkopf (130), einen Gewindebereich (132) und einen zwischen dem Schraubenkopf (130) und dem Gewindebereich (132) angeordneten Schaftbereich (134), dessen Außendurchmesser (d) kleiner ist als der Außendurchmesser (D) des Gewindebereichs (132), aufweist, und
dass der Bund (124) eine Durchtrittsöffnung (150) aufweist, deren Durchmesser (d') kleiner ist als der Außendurchmesser (D) des Gewindebereichs (132) der Schraube (122).

15. Verfahren zum Herstellen einer Kombination aus einer Hülse (123) aus einem Hülsengrundkörper (126) und einem in radialer Richtung über den Hülsengrundkörper (126) überstehenden Bund (124) und einer durch die Hülse (123) hindurchtretenden Schraube (122), umfassend folgende Verfahrensschritte:
- Bereitstellen einer Bund-Vorform (124') mit einer Vorform-Durchtrittsöffnung (150') und mindestens einer Ausnehmung (148);
- Bereitstellen eines Hülsengrundkörpers (126) mit mindestens einem Vorsprung (138);
- Anordnen des Hülsengrundkörpers (126) an der Bund-Vorform (124') derart, dass der mindestens eine Vorsprung (138) des Hülsengrundkörpers (126) in die mindestens eine Ausnehmung (148) der Bund-Vorform (124') eingreift;
- Einstecken der Schraube (122) in die Bund-Vorform (124') und den Hülsengrundkörper (126);
- Verpressen des Hülsengrundkörpers (126) mit der Bund-Vorform (124') derart, dass die Bund-Vorform (124') zu einem Bund (124) verformt wird, der verliersicher mit dem Hülsengrundkörper (126) verbunden ist.

## Claims

1. A combination of a sleeve (123) with a sleeve base body (126) and a flange (124) which is produced separately from the sleeve base body (126) and protrudes in the radial direction beyond the sleeve base body (126), and a screw member (122), which passes through the sleeve (123), **characterised in that**,
the sleeve base body (126) has at least one projection (138) which engages in a recess (148) provided in the flange (124), wherein the sleeve base body (126) is pressed against the flange (124) in such a manner that the sleeve base body (126) and the flange (124) are connected together in captive manner.

2. A combination in accordance with Claim 1, **characterised in that** the sleeve base body (126) has at least two projections (138) which engage in a respective recess (148) provided in the flange (124).

3. A combination in accordance with Claim 2, **characterised in that** the sleeve base body (126) has at least three projections (138) which engage in a respective recess (148) provided in the flange (124).

4. A combination in accordance with Claim 2 or 3, **characterised in that** the projections (138) succeed one another substantially equidistantly around the periphery of the sleeve base body (126).

5. A combination in accordance with any of claims 1 to 4, **characterised in that** the at least one projection (138) is aligned substantially parallel to the longitudinal axis (140) of the sleeve base body (126).

6. A combination in accordance with any of claims 1 to 5, **characterised in that** the regions of the flange (124) bounding the at least one recess (148) are orientated substantially perpendicularly to the longitudinal axis (140) of the sleeve base body (126) in the state where it is pressed against the sleeve base body (126).

7. A combination in accordance with any of claims 1 to 6, **characterised in that** the at least one recess (148) in the flange (124) opens into a through opening (150) in the flange.

8. A combination in accordance with any of claims 1 to 7, **characterised in that** the flange (124) has a through opening (150) arranged substantially centrally of the flange (124).

9. A combination in accordance with any of claims 1 to 8, **characterised in that** the flange (124) is formed from a flange pre-form (124') in which the regions of the flange (124) bounding the at least one recess (148) in the flange (124) are orientated at an angle with respect to the central axis (146) of the flange (124).

10. A combination in accordance with Claim 9, **characterised in that** the regions of the flange pre-form (124') bounding the at least one recess (148) in the flange (124) define a through opening (150') in the pre-form, the diameter (D') of which is greater than the diameter (d') of the through opening (150) in the flange (124) when in the state where it is pressed against the sleeve base body (126).

11. A combination in accordance with any of Claims 1 to 10, **characterised in that** the flange (124) protrudes radially inwardly and radially outwardly beyond the sleeve base body (126).

12. A combination in accordance with any of Claims 1 to 10, **characterised in that** the flange (124) protrudes only radially outwardly beyond the sleeve base body (126).

13. A combination in accordance with any of claims 1 to 12, **characterised in that** the sleeve (123) is held captive on the screw member (122).

14. A combination in accordance with any of claims 1 to 13, **characterised in that** the screw member (122) comprises a screw member head (130), a threaded portion (132) and a shank portion (134) which is arranged between the screw member head (130) and the threaded portion (132) and has an external diameter (d) that is smaller than the external diameter (D) of the threaded portion (132), and
**in that** the flange (124) has a through opening (150) the diameter (d') of which is smaller than the external diameter (D') of the threaded portion (132) of the screw member (122).

15. A method of making a combination from a sleeve (123) from a sleeve base body (126) and a flange (124) which protrudes in the radial direction beyond the sleeve base body (126), and a screw member (122) passing through the sleeve (123), comprising the following method steps:
- providing a flange pre-form (124') having a through opening (150') in the pre-form and at least one recess (148) ;
- providing a sleeve base body (126) having at least one projection (138);
- arranging the sleeve base body (126) on the flange pre-form (124') in such a manner that the at least one projection (138) of the sleeve base body (126) engages in the at least one recess (148) in the flange pre-form (124');
- inserting the screw member (122) into the flange pre-form (124') and the sleeve base body (126);
- pressing the sleeve base body (126) against the flange pre-form (124') in such a manner that the flange pre-form (124') is deformed into a flange (124) which is connected to the sleeve base body (126) in captive manner.

## Revendications

1. Combinaison d'un manchon (123) avec un corps de base de manchon (126) et un collet (124) fabriqué séparément du corps de base de manchon (126), dépassant en direction radiale du corps de base de manchon (126), et d'une vis (122) qui traverse le manchon (123), **caractérisée en ce que** le corps de base de manchon (126) présente au moins une saillie (138) qui s'engage dans un évidement (148) prévu sur le collet (124), le corps de base de manchon (126) étant pressé avec le collet (124) de sorte que le corps de base de manchon (126) et le collet (124) soient reliés de manière imperdable l'un à l'autre.

2. Combinaison selon la revendication 1, **caractérisée en ce que** le corps de base de manchon (126) présente au moins deux saillies (138) qui s'engagent respectivement dans un évidement (148) prévu sur le collet (124).

3. Combinaison selon la revendication 2, **caractérisée en ce que** le corps de base de manchon (126) présente au moins trois saillies (138) qui s'engagent respectivement dans un évidement (148) prévu sur le collet (124).

4. Combinaison selon l'une quelconque des revendications 2 ou 3, **caractérisée en ce que** les saillies (138) se suivent essentiellement à équidistance le long du sens périphérique du corps de base de manchon (126).

5. Combinaison selon l'une quelconque des revendications 1 à 4, **caractérisée en ce que** l'au moins une saillie (138) est orientée essentiellement parallèlement à l'axe longitudinal (140) du corps de base de manchon (126).

6. Combinaison selon l'une quelconque des revendications 1 à 5, **caractérisée en ce que** les zones du collet (124) entourant au moins un évidement (148) sont orientées à l'état pressé avec le corps de base de manchon (126) essentiellement perpendiculairement à l'axe longitudinal (140) du corps de base de manchon (126).

7. Combinaison selon l'une quelconque des revendications 1 à 6, **caractérisée en ce que** l'au moins un évidement (148) du collet (124) débouche dans une ouverture de passage (150) du collet (124).

8. Combinaison selon l'une quelconque des revendications 1 à 7, **caractérisée en ce que** le collet (124) présente une ouverture de passage (150) disposée essentiellement au milieu sur le collet (124).

9. Combinaison selon l'une quelconque des revendications 1 à 8, **caractérisée en ce que** le collet (124) est formé dans une préforme de collet (124'), pour laquelle les zones du collet (124) entourant au moins un évidement (148) du collet (124) sont orientées en biais par rapport à l'axe médian (146) du collet (124).

10. Combinaison selon la revendication 9, **caractérisée en ce que** les zones entourant l'au moins un évidement (148) du collet (124) de la préforme de collet (124') définissent une ouverture de passage de préforme (150'), dont le diamètre (D') est plus grand que le diamètre (d') de l'ouverture de passage (150) du collet (124) à l'état pressé avec le corps de base de manchon (126).

11. Combinaison selon l'une quelconque des revendications 1 à 10, **caractérisée en ce que** le collet (124) dépasse radialement vers l'intérieur et radialement vers l'extérieur du corps de base de manchon (126).

12. Combinaison selon l'une quelconque des revendications 1 à 10, **caractérisée en ce que** le collet (124) dépasse uniquement radialement vers l'extérieur du corps de base de manchon (126).

13. Combinaison selon l'une quelconque des revendications 1 à 12, **caractérisée en ce que** le manchon (123) est maintenu de manière imperdable sur la vis (122).

14. Combinaison selon l'une quelconque des revendications 1 à 13, **caractérisée en ce que** la vis (122) présente une tête de vis (130), une zone de filetage (132) et une zone de corps (134) disposée entre la tête de vis (130) et la zone de filetage (132), dont le diamètre extérieur (d) est plus petit que le diamètre extérieur (D) de la zone de filetage (132) et **en ce que** le collet (124) présente une ouverture de passage (150), dont le diamètre (d') est plus petit que le diamètre extérieur (D) de la zone de filetage (132) de la vis (122).

15. Procédé de fabrication d'une combinaison d'un un manchon (123) composé d'un corps de base de manchon (126) et d'un collet (124) dépassant en direction radiale du corps de base de manchon (126), et d'une vis (122) traversant le manchon (123), comprenant les étapes de procédé suivantes :
■ mise à disposition d'une préforme de collet (124') avec une ouverture de passage de préforme (150') et au moins un évidement (148) ;
■ mise à disposition d'un corps de base de manchon (126) avec au moins une saillie (138) ;
■ disposition du corps de base de manchon (126) sur la préforme de collet (124') de telle sorte que l'au moins une saillie (138) du corps de base de manchon (126) s'engage dans l'au moins un évidement (148) de la préforme de collet (124') ;
■ insertion de la vis (122) dans la préforme de collet (124') et le corps de base de manchon (126) ;
■ pressage du corps de base de manchon (126) avec la préforme de collet (124') de telle sorte que la préforme de collet (124') soit déformée en un collet (124) qui est relié de manière imper-dable au corps de base de manchon (126).
